# EUROPÄISCHE PATENTSCHRIFT

(11) **EP 2 285 885 B1**
(45) Veröffentlichungstag und Bekanntmachung des Hinweises auf die Patenterteilung: **30.09.2015**
(21) Anmeldenummer: 09757519.5
(22) Anmeldetag: 02.06.2009
(51) Int. Cl.: C08K 5/103, C09K 3/18

(54) **ANTIBESCHLAGMITTEL AUF BASIS VON POLYGLYCERIN UND NATIVEN ÖLEN**
ANTI-FOGGING AGENT BASED ON POLYGLYCEROL AND NATIVE OILS
AGENT ANTI-CONDENSATION À BASE DE POLYGLYCÉRINE ET D'HUILES NATIVES

(30) Priorität: 02.06.2008 DE 102008026263
(43) Veröffentlichungstag der Anmeldung: 23.02.2011
(73) Patentinhaber: Emery Oleochemicals GmbH, 40589 Düsseldorf (DE)
(72) Erfinder: DAUTE, Peter, 27616 Beverstedt (DE); SCHÄFER, Martin, 27616 Stubben (DE)
(74) Vertreter: Kinkeldey, Daniela
(86) Internationale Anmeldenummer: PCT/EP2009/056742
(87) Internationale Veröffentlichungsnummer: WO 2009/147138

(56) Entgegenhaltungen:
- EP-A- 0 516 099
- EP-A- 0 867 277
- EP-A- 1 626 064
- DE-A1- 19 626 458
- JP-A- 2008 095 116

## Beschreibung

Gegenstand der Erfindung sind allgemein Esterprodukten, sowie deren Verwendung als Antibeschlagmittel, Antibeschlagmittel und Verfahren zu deren Herstellung. Die Erfindung betrifft auch Formkörper und Polymerzusammensetzungen, die solche Antibeschlagmittel enthalten, sowie deren Herstellung und Verwendung.

Bei der Verarbeitung von Kunststoffen werden diesen oft Antibeschlagmittel (Anti-Fogging Agents) zugesetzt. Diese dienen dazu, auf der Oberfläche der Kunststoffe die Kondensation von Wasser und die Bildung von Wassertropfen zu verhindern. Solche Zusätze werden häufig bei der Herstellung transparenter Verpackungen und Folien eingesetzt. Ohne Antibeschlagmittel bildet sich insbesondere bei transparenten Verpackungsfolien auf der Innenseite ein Niederschlag, wodurch der Inhalt der Verpackung kaum oder nicht mehr erkennbar ist, wie sich aus Plastics Addives Handbook, 5th Edition, Hanser Verlag, S. 609-626 ergibt. Die Verhinderung von Niederschlägen ist auch bei anderen Anwendungen, beispielsweise Brillen, Fenstern oder Visieren von Helmen als Raumformen von Bedeutung. Allgemein werden interne Antibeschlagmittel in den Kunststoff eingearbeitet und werden damit Teil des Kunststoffes und damit auch der diesen Kunststoff aufweisenden Raumform, während externe Antibeschlagmittel von außen auf den Kunststoff aufgetragen und damit als Oberflächenschicht Teil des Kunststoffes und damit auch der diesen aufweisenden Raumform werden.

Aus der DE 10 2004 038 980 A1 sind Antibeschlagmittel für Kunststoffe bekannt, die durch die Umesterung nativer Öle mit Polyethylenglycol erhältlich sind.

Gegenstand des US-Patentes 3,759,856 sind Stabilisatoren für Kunststoffe wie PVC auf der Basis von partiellen Glycerolestern von Monocarbonsäuren. Die Ester verleihen den Kunststoffen Antibeschlageigenschaften und antistatische Eigenschaften. Die Ester werden durch die Umsetzung von Polyglycerin mit Fettsäuren oder mit Fettsäuregemischen erhalten, wobei entweder kein oder ein Säurekatalysator eingesetzt wird.

In dem US-Patent 5,302,327 wird ein Verfahren zur Herstellung von thermoplastischen Schichten mit Antibeschlag-Eigenschaften mittels Coronaentladung offenbart. Als Antibeschlagmittel werden Polyglycerinester oder Sorbitanester von Fettsäuren eingesetzt. Bevorzugt werden Monoester eingesetzt. Beispielhaft wird das Produkt Glycolube AFA-1 der Lonza Inc. eingesetzt.

Das Dokument D1 EP-A-1 626 064 offenbart ein Antibeschlagmittel erhältlich durch Umesterung nativer Öle mit PEG und weiterer Polyolen.

Allgemein liegt eine Aufgabe darin, die sich aus dem Stand der Technik ergebenden Nachteile zu überwinden. Außerdem weisen die bekannten Mittel oft nicht optimale Eigenschaften hinsichtlich der Verhinderung der Tropfenbildung auf Es besteht daher ein kontinuierliches Bedürfnis, die bekannten Antibeschlagmittel zu verbessern und die Herstellungsverfahren zu vereinfachen. Da weltweit große Mengen an Antibeschlagmittel eingesetzt werden, wäre ein effizienter Herstellungsprozess und eine leichtere Verfügbarkeit der Rohmaterialien von Bedeutung.

Insbesondere sollen Verfahren zur Herstellung von Antibeschlagmittel bereitgestellt werden, die auf einfache Art und Weise mit wenigen Verfahrensschritten durchführbar sind. Insgesamt soll die Herstellung von Antibeschlagmittel erleichtert werden und die Verfügbarkeit der Rohmaterialien verbessert werden. Gleichzeitig sollen die erfindungsgemäßen Antibeschlagmittel gute AntibeschlagEigenschaften aufweisen. Der Erfindung liegt insbesondere die Aufgabe zugrunde, die Antibeschlag-Eigenschaften gegenüber bekannten Mitteln zumindest gleichwertig zu erreichen oder sogar zu verbessern. Dabei soll unter Feuchtigkeitsbedingungen die Bildung von Tropfen auf den Kunststoffen möglichst früh stattfinden und daraus möglichst schnell ein klarer Film entstehen. So soll auch ein verbessertes Packgut bereitgestellt werden.

Einen Beitrag zur Lösung von mindestens einer der vorstehenden Aufgaben leistet ein Verfahren, ein Esterprodukt, ein Antibeschlagmittel, eine Polymerzusammensetzung, ein Formkörper sowie deren Verwendung gemäß der jeweiligen kategoriebildenden Ansprüche, wobei die davon jeweils abhängigen Unteransprüche bevorzugte Ausgestaltungen betreffen.

Ein Gegenstand der Erfindung bildet ein Antibeschlagmittel, beinhaltend
a) ein Esterprodukt, erhältlich nach einem Verfahren beinhaltend als Verfahrenschritte:
   S1) Bereitstellen einer Reaktionsmischung als Reaktionskomponenten beinhaltend
      S1a) ein mindestens zwei Glycerineinheiten aufweisendes Polyglycerin;
      S1b) ein auf einem nativen Öl basierendes Öl;
   S2) Umsetzen des Reaktionsgemisch durch eine Umesterung in Gegenwart eines basischen Katalysators unter Erhalt des Esterprodukts;
b) mindestens ein weiteres Antibeschlagagens ausgewählt aus der Gruppe bestehend aus einem Polyethylenglykolether, einem Partialglycerid oder einem Polyethylenglykolester oder eine Mischung aus mindestens zwei davon.

Das Verfahren unterscheidet sich angesichts der basisch katalysierten Umesterung von bekannten Verfahren zur Herstellung von Antibeschlagmitteln, bei denen die Antibeschlagmittel durch eine Veresterung von Fettsäuren erhalten werden.

Als Esterprodukt werden erfindungsgemäß sowohl einzelne reine Ester als auch Estergemische mit zwei und mehr voneinander verschiedenen Einzelestern verstanden. Bevorzugt weist dass Esterprodukt zu mindestens 20 Gew.-%, vorzugsweise zu mindestens 30 Gew.-% und besonders bevorzugt zu mindestens 60 Gew.-%, jeweils bezogen auf das Esterprodukt, einen bestimmten Polyglycerinpartialester auf. In manchen Fällen wird der bestimmte eine Polyglycerinpartialester bis maximal 80 oder 90 Gew.-%, jeweils bezogen auf das Esterprodukt gefunden.

Unter basisch wird vorzugsweise verstanden, dass das zur Umesterung eingesetzte Reaktionsgemisch einen pH-Wert in einem Bereich von 7 bis 14, vorzugsweise von 8 bis 14 und besonders bevorzugt 9 bis 13 hat.

Zudem entspricht es einer Ausgestaltung des erfindungsgemäßen Verfahrens, dass das Reaktionsgemisch die Reaktionskomponenten S1a und S1b zu mindestens 50 Gew.-%, vorzugsweise zu mindestens 75 Gew.-% und besonders bevorzugt zu mindestens 90 Gew.-%, jeweils bezogen auf das Gesamtgewicht des Reaktionsgemisch, beinhaltet. In einer besonders bevorzugten Ausführungsform enthält das Reaktionsgemisch 10 bis 95 Gew.-% des Öls, besonders bevorzugt zwischen 20 bis 90 Gew.-% des Öls. In einer weiteren bevorzugten Ausführungsform enthält das Reaktionsgemisch 5 bis 90 Gew.-% Polyglycerin, besonders bevorzugt 10 bis 50 Gew.-% Polyglycerin oder zwischen 15 und 40 Gew.-% Polyglycerin. Bevorzugt ist der Anteil des basischen Katalysators geringer als 1 Gew.-%, besonders bevorzugt geringer als 0, 1 Gew.-%. Besonders bevorzugt ist der Anteil des basischen Katalysators am Reaktionsgemisch zwischen 0,1 und 10 ppm. In einer weiteren bevorzugten Ausführungsform ist der Anteil des weiteren Alkohols mit mindestens zwei Hydroxygruppen zwischen 0 und 20 Gew.-%, besonders bevorzugt zwischen 0,1 und 10 Gew.-%. Zudem entspricht es einer weiteren Ausgestaltung der vorliegenden Erfindung, dass Polyglycole, insbesondere Polyethylenglycol oder Polypropylenglycol ebenso in dem Reaktionsgemisch enthalten sind.

Erfindungsgemäß bevorzugt ist ein Verfahren, wobei das Verfahren in einem Reaktionsgemisch durchgeführt wird, das folgende Reaktionskomponenten enthält:
mindestens 5, bevorzugt mindestens 10 und besonders bevorzugt mindestesns 15 Gew.-%, Öl;
von 5 bis 95, bevorzugt von 10 bis 90 und besonders bevorzugt von 5 bis 85 Gew.-% Polyglycerin;
von 0,0001 bis 1, bevorzugt von 0,001 bis 0,5 und besonders bevorzugt von 0,001 bis 0,1 Gew.-% basischer Katalysator;
von 0 bis 40 % Gew.-% , bevorzugt von 0 bis 30 und besonders bevorzugt von 0 bis 20 Gew.-% eines weiteren Alkohols mit mindestens zwei Hydroxygruppen;
von 0 bis 20, bevorzugt von 0 bis 10 und besonders bevorzugt von 0 bis 5 Gew.-% von den vorstehenden Reaktionskomponenten verschiedene Zusatzstoffe wie Verunreinigungen,
wobei die Summe aller Gewichtsprozentangaben der Reaktionskomponenten 100 ergibt.

Fettsäuren werden chemisch üblicherweise durch die Isolierung aus Fetten oder Ölen sowie durch chemische Synthese erhalten. Das erfindungsgemäße Verfahren hat den Vorteil, dass die Umesterung unmittelbar ausgehend von Ölen und Polyglycerinen erfolgen kann. Das Verfahren wird dadurch vereinfacht und die Verfügbarkeit der Rohstoffe verbessert. Überraschenderweise zeigen derartige Esterprodukte auch sehr gute Antibeschlageigenschaften.

Erfindungsgemäß bevorzugt ist ein Verfahren, bei dem die Veresterung in einem Eintopfverfahren erfolgt. Bei einem Eintopfverfahren werden das Öl, das Polyglycerin und der basische Katalysator vermischt und anschließend, vorzugsweise in dem gleichen Reaktor, umgesetzt. Im Gegensatz zu einem zwei oder mehrstufigen Verfahren, in dem zunächst das Öl in Fettsäure und Glycerin gespalten und dann verestert wird, liegen erfindungsgemäß das Öl oder die Öle mit einem Anteil von freien, Fettsäuren unter 30 Gew.-%, vorzugsweise unter 15 Gew.-% und besonders bevorzug unter 5 Gew.-%, jeweils bezogen auf das Öl, vor dem Beginn der Umesterung vor.

Die erfindungsgemäß einsetzbaren basischen Katalysatoren weisen vorzugsweise einen in Wasser bei 25°C bestimmten pH-Wert von mehr als 7, vorzugsweise mehr als 8, besonders bevorzugt mehr als 10 und darüber hinaus bevorzugt mehr als 12 auf. Grundsätzlich kommen alle dem Fachmann bekannten und für die erfindungsgemäße Umesterung geeignet erscheinenden Katalysatoren in Betracht. In einer bevorzugten Ausführungsform der Erfindung ist der basische Katalysator ausgewählt aus der Gruppe bestehend aus Alkalihydroxid, Erdalkalihydroxid oder Hydroxide der III. Hauptgruppe des Periodensystems der Elemente, jeweils einschließlich ihrer Hydrate oder ein Gemisch aus mindestens zwei davon. Besonders bevorzugte Katalysatoren sind Natriumhydroxid, Kaliumhydroxyd, Lithiumhydroxid oder ein Gemisch aus mindestens zwei davon als Alkalimhydroxide, sowie Magnesiumhydroxid, Calciumhydroxid oder ein Gemisch aus zwei davon als Erdalkalimetallhydorxid, Aluminiumhydroxid oder Borhydroxid oder beide als Hydroxide der III. Hauptgruppe und Gemische aus mindestens zwei davon. Besonders bevorzugt ist Lithiumhydroxid, insbesondere das Monohydrat von Lithiumhydroxid.

Weiterhin ist es erfindungsgemäß bevorzugt, dass die Umesterung bei mindestens zwei voneinander verschiedenen Drücken erfolgt. Hierbei ist es bevorzugt, dass ein erster bei der Umesterung herrschender Druck größer, vorzugsweise um mindestens 10 mbar, besonders bevorzugt um mindestens 100 mbar, weiterhin bevorzugt um mindestens 200 mbar und ferner bevorzugt um mindestens 250 mbar größer ist als ein mindestens ein weiterer ebenfalls bei der Umesterung herrschender Druck. Es ist in dem erfindungsgemäßen Verfahren weiterhin bevorzugt, dass der mindestens eine weitere Druck in einem Bereich von 100 bis 500 mbar, bevorzugt von 150 bis 450 mbar und besonders bevorzugt von 250 bis 350 mbar liegt. Ferner ist es erfindungsgemäß bevorzugt, dass der erste Druck und der mindestens eine weitere Druck mit einer Zeitdifferenz von mindestens 5 min, vorzugsweise mindestens 15 min und besonders bevorzugt in einem Bereich von 30 bis 90 min aufeinander folgen.

Zudem ist es erfindungsgemäß bevorzugt, dass Umsetzung bei einer Temperatur durchzuführen, bei der eine Umesterung erfolgt, die oftmals über 40°C liegt. Allgemein ist zu beachten, dass die Umesterungstemperatur so gewählt ist, dass das Esterprodukt nicht durch eine zu hohe thermische Belastung verfärbt wird. Hierbei ist es bevorzugt, die Umesterung in einem Bereich von 100 bis 350°C, vorzugsweise von 150 bis 300°C und besonders bevorzugt von 200 bis 270°C durchzuführen. Weiterhin ist es bevorzugt, dass der Übergang von dem ersten zu der mindestens einen weiteren Druck mindestens bei einer Temperatur oberhalb von 40°C und bevorzugt bei den vorstehend genannten erfindungsgemäßen Temperaturen erfolgt. So ist es erfindungsgemäß ferner bevorzugt, die Umesterung über einen Umsetzungszeitraum von 10 min bis 10 h, vorzugsweise von 0,5 bis 7 h und besonders bevorzugt von 1 bis 6 h durchzuführen. Vorliegend wird als beginn des Umsetzungszeitraums angesehen, wenn die Umesterung im nennenswerten Umfang einsetzt, wie das beispielsweise bei einer Temperatur über 40°C der Fall ist.

Erfingdungsgemäß wird als Öl ein natives Öl verwendet, das auch chemisch verändert sein kann. Mit der Bezeichnung "Öl" werden Gemische von Estern des Glycerins bezeichnet. Native Öle bestehen im Wesentlichen aus Glycerinester von aliphatischen Monocarbonsäuren, den sogenannten Fettsäuren. Diese weisen Kettenlängen von 6 bis 22 C-Atomen auf. Die Ester werden auch als Triglyceride bezeichnet. "Öle" im Sinne der Erfindung liegen vor, wenn diese oberhalb 40°C, flüssig sind. Native Öle aus verschiedenen biologischen Quellen unterscheiden sich hinsichtlich der Art und Mengenverteilung der enthaltenen Fettsäuren. Erfindungsgemäße native Öle können sowohl pflanzlicher als auch tierischer Herkunft sein. Unter die erfindungsgemäßen nativen Öle fallen auch synthetisch hergestellte Öle, die einem mit den nativen Ölen gleichen chemischen Aufbau besitzen. Erfindungsgemäß bevorzugt ist der Einsatz nativer Öle mit einem Anteil an Triglyceriden größer 50, vorzugsweise größer 75 und besonders bevorzugt größer 90 Gew.-%, jeweils bezogen auf das Öl.

In einer bevorzugten Ausführungsform der Erfindung liegt der Anteil der C18-Fettsäuren an den gesamten Fettsäuren, die mit dem einen Glycerin des Öls verestert sind, in einem Bereich von 30 und 95, vorzugsweise 50 bis 95 und besonders bevorzugt von 75 bis 95 sowie darüber hinaus bevorzugt von 80 bis 95 Gew.-%, jeweils bezogen auf das Öl. In einer weiteren Ausführungsform ist der Anteil an ungesättigten Fettsäuren in den Glyceriden größer 10, vorzugsweise größer 30, insbesondere größer 60 und besonders bevorzugt größer 70 Gew.-%, jeweils bezogen auf das Öl.

In einer bevorzugten Ausführungsform der Erfindung ist das Öl ausgewählt ist aus der Gruppe bestehend aus Rüböl, Rizinusöl, gehärtetes Rizinusöl, Sonnenblumenöl, Palmöl, Talgöl, gehärtetes Talgöl, Kokosöl. Erdnussöl und Sojaöl oder eine Mischung aus mindestens zwei davon, wobei Rüböl besonders bevorzugt ist. Sonnenblumenöl wird aus den Samen der Sonnenblume hergestellt und weist ungefähr 35 bis 95 % C18-Fettsäuren auf. Der Anteil an ungesättigten Fettsäuren liegt etwa zwischen 20 und 75 %. Rizinusöl wird durch Kaltpressen aus den Samen der Rizinusstaude gewonnen und enthält zu etwa 80 bis 85 % das Glycerid der Rizinolsäure. Rüböl wird auch als Rapsöl bezeichnet und wird durch Pressen aus den Samen von Raps gewonnen. Das Öl enthält etwa 63 % Ölsäure und 20 % Linolsäure. Sojaöl wird durch Pressen gegebenenfalls gefolgt von Extraktion von Kohlenwasserstoffen aus Sojabohnen gewonnen und enthält vornehmlich C18-Fettsäuren, die überwiegend ungesättigt sind. Palmöl wird aus dem Fruchtfleisch der Palmfrüchte gewonnen und enthält einen hohen Anteil an Linolsäure.

Im Sinne der Erfindung bedeutet "chemisch verändert", dass das aus biologischen Quellen erhaltene Öl einer Behandlung unterzogen wird, die die Esterbindungen im Wesentlichen nicht beeinflusst und die chemische Konsistenz des Öls verändert. Ein erfindungsgemäß bevorzugtes chemisches Nachbehandlungsverfahren von nativen Ölen ist die Härtung, bei der die in einigen Fettsäureketten enthaltenen Kohlenstoff-Köhlenstoff-Doppel- und Dreifachbindungen zu Einfachbindungen umgewandelt werden. Die erfindungsgemäßen Öle können auch mit Zusatzstoffen vermischt sein. Als natives Öl im Sinne der Erfindung werden auch Gemische angesehen, die mehr als 50 %, bevorzugt mehr als 75 oder 90 % des nativen Öls enthalten.

Im Sinne der Erfindung steht "Polyglycerin" für Ether aus zwei oder mehr Glycerinmolekülen. Im Sinne der Erfindung umfasst der Begriff Polyglycerin daher auch Diglycerin. Unter dem Begriff Polyglycerin werden auch Ethergemische bezeichnet, die je nach ihrem Herstellungsverfahren und anschließenden Trennungsschritten eine bestimmte Verteilung von Dimeren, Trimeren, Tetrameren usw. aus Glycerin aufweisen. Im Stand der Technik sind zahlreiche Verfahren zur Herstellung von Polyglycerinen bekannt, beispielsweise in US 3,968,169. Die Solvay Chemicals International bietet ein Diglycerin und ein Polyglycerin unter den Markenbezeichnungen "Solvay Diglycerol" und "Solvay Polyglycerol-3" an. Polyglycerine dienen industriell als Ausgangsstoffe zur Herstellung von Kosmetika, als Emulgatoren für die industrielle Anwendung und als Zusätze für Nahrungsmittel.

In einer bevorzugten Ausführungsform der Erfindung weist das Polyglycerin eine durchschnittliche Anzahl von 1,5 bis 5 Glycerineinheiten pro Molekül auf. Besonders bevorzugt ist eine durchschnittliche Anzahl von 2 bis 4 Glycerineinheiten pro Molekül. Allgemein ist es besonders bevorzugt, dass das Polyglycerin mehr als 70 Gew.-%, vorzugsweise mehr als 80 Gew.-% und besonders bevorzugt mehr als 85 Gew.-%, jeweils bezogen auf das Polyglycerin, Di-, Tri- und Tetraglycerin enthält. In einer besonders bevorzugten Ausführungsform der Erfindung wird als Polyglycerin ein Gemisch verwendet, das mehr als 30, besonders bevorzugt mehr als 40 % Triglycerin enthält. Besonders bevorzugt ist die Verwendung eines Gemisches, das weniger als 10 % Monoglycerin, 20 bis 40 % Diglycerin, 25 bis 50 % Triglycerin und 10 bis 30 % Tetraglycerin sowie weniger als 20 % Polyglycerine aus 5 Glycerinuntereinheiten oder mehr besteht. Dies entspricht der Verteilung der Glycerine in dem Produkt "Solvay Polyglycerol-3", dessen Verwendung besonders bevorzugt ist.

Erfindungsgemäß bevorzugt ist ein Verfahren, bei dem die Umesterung in Gegenwart mindestens eines weiteren, von dem Polyglycerin verschiednen Alkohols erfolgt. In einer bevorzugten Ausführungsform der Erfindung weist der weitere Alkohol mindestens zwei, vorzugsweise 2 bis 50, besonders bevorzugt 2 bis 40 und ferner bevorzugt 2 bis 20 Hydroxygruppen auf. In einer bevorzugten Ausführungsform der Erfindung ist der weitere Alkohol ausgewählt aus der Gruppe bestehend aus Glycerin, Sorbit, Pentaerythrit und Trimethylolpropan oder deren Alkoxilate, Polyethylenglycol, vorzugsweise mit 2 bis 200 Ethylenoxid-Wiederholungseinheiten, Polypropylenglycol, vorzugsweise mit 2 bis 200 Ethlenoxid-Wiederholungseinheiten oder Mischungen aus mindestens zwei davon, wobei Glycerin, Sorbitol oder Polyethylenglycol bevorzugt sind.

Ein weiterer Gegenstand der Erfindung ist ein Esterprodukt, das nach einem erfindungsgemäßen Verfahren erhältlich ist.

Erfindungsgemäß bevorzugt ist ein Esterprodukt mit mindestens einer, vorzugsweise jeder der folgenden Eigenschaften:
E1 einer Viskosität einem Bereich von 1,5 bis 6000, bevorzugt von 5 bis 4000 und besonders bevorzugt von 10 bis 3000 mPas,
E2 eine Dichte zwischen 0,8 und 1,4, bevorzugt von 0,85 bis 1,35 und besonders bevorzugt von 0,85 bis 1,3 g/cm³.

Gegenstand der Erfindung ist auch ein Antibeschlagmittel, das ein erfindungsgemäßes Esterprodukt, vorzugsweise in einer Menge in einem Bereich von 10 bis 99,9 und bevorzugt von 15 bis 95 Gew.-%, jeweils bezogen auf das Antibeschlagmittel, beinhaltet. Besonders bevorzugt ist ein Antibeschlagmittel zur Verwendung als internes Antibeschlagmittel.

Erfindungsgemäß bevorzugt ist ein Antibeschlagmittel, enthaltend mindestens ein weiteres Antibeschlagagens. Dies bedeutet, dass eine weitere Substanz enthalten ist, die die Antibeschlagwirkung des Mittels verbessert und die nicht ein erfindungsgemäßes Estergprodukt aus der Umesterung eines nativen Öls mit einem Polyglycerin ist. In einer bevorzugten Ausführungsform der Erfindung ist das weitere Antibeschlagagens ein Polyethylenglykolether, ein Partialglycerid oder ein Polyethylenglykolester oder eine Mischung aus mindestens zwei davon. Besonders bevorzugt ist ein Polyethylenglykololeat, insbesondere Polyethylenglykolsorbitanmonooleat. Das weitere Antibeschlagagens bzw. ein Gemisch weiterer Antibeschlagagentien wird bevorzugt in einem Verhältnis von 1:10 bis 10:1 zu dem erfindungsgemäßen Esterprodukt eingesetzt. Besonders bevorzugt ist das Verhältnis zwischen 1:2 und 2:1.

Ein weiterer Gegenstand der Erfindung ist eine Polymerzusammensetzung, beinhaltend ein erfindungsgemäßes Esterprodukt oder Antibeschlagmittel oder beide und mindestens ein Polymer. Grundsätzlich kommt jedes schmelzbare Polymer in Betracht. Hierunter fallen insbesondere lineare Polymere sowie verzweigte Polymere, die jeweils allgemein Thermoplasten genannt werden. Die erfindungsgemäß in der Polymerzusammensetzung beinhalteten Polymere lassen sich durch jede dem Fachmann zur Herstellung von Thermoplasten bekannte Verfahren wie Polykondensation, Polyringöffnung, Polyaddition, metallkatalysierte, anionisch, kantionische und radikalische Polymerisation erhalten. In einer bevorzugten Ausführungsform der Erfindung ist das Polymer ausgewählt aus der Gruppe bestehend aus Polyvinylchlorid, Polypropylen, Polyethylen, Polyethylen/Polypropylen-Copolymeren, Polyethylenterephthalat, Polylactat, Polycarbonat, Copolymeren oder Polyester und Gemischen aus mindestens zwei davon. Als Copolymere können auch solche verwendet werden, die eine der oben bezeichneten Untereinheiten als Monomerbaustein enthalten und mit einem hier nicht genannten Monomerbaustein copolymerisiert wurden.

In einer bevorzugten Ausführungsform der Erfindung enthält die Polymerzusammensetzung 0,01 bis 10 Gew.-%, bevorzugt 0,05 bis 7 Gew.-% und besonders bevorzugt 0,1 bis 5 Gew.-%, jeweils bezogen auf die Polymerzusammensetzung, des Esterprodukts.

In einer bevorzugten Ausführungsform der Erfindung beinhaltet die Polymerzusammensetzung 10 bis 99,95, bevorzugt 50 bis 99 und besonders bevorzugt 60 bis 95 Gew.-%, jeweils bezogen auf die Polymerzusammensetzung, des Polymers oder der Polymere.

In weiteren Ausführungsformen der Erfindung enthält die Polymerzusammensetzung oder das Antibeschlagmittel weitere Zusatzstoffe, ausgewählt aus der Gruppe bestehend aus Stabilisatoren, Gleitmitteln, Weichmachern, Antiblockmitteln, weiteren Antibeschlagmitteln, Antistatika, Flammschutzmitteln, Farbstoffen, Pigmenten, Treibmitteln, Füllstoffen, Fetten, Ölen und Lösungsmitteln oder eine Mischung aus mindestens zwei davon.
Stabilisatoren bewahren Kunststoffe wie PVC davor, sich bei hohen Temperaturen zu zersetzen oder chemisch zu verändern, und verbessern die Witterungsbeständigkeit. Eingesetzt werden beispielsweise Verbindungen auf der Basis von Blei, Calcium, Zink, Barium und Zinn.

Gleitmittel dienen dazu, die PVC-Verarbeitung durch Verminderung der Friktion zwischen den PVC-Ketten und die Herabsetzung der Wandhaftung der PVC-Schmelze zu erleichtern. Häufig verwendete Gleitmittel sind Metallseifen, wie Blei- und Calciumstearate und -laurate, die gleichzeitig als Co-Stabilisator wirken.

Weichmacher verleihen dem Kunststoff Geschmeidigkeit und Flexibilität. Viele Weichmacher gehören zur Gruppe der Phthalate (DEHP, DINP und DIDP), sowie der Adipate und Citrate.

Antiblockmittel sind Additive, die das Verkleben ("Blocken") beschichteter Flächen miteinander oder mit Substraten (z.B. beim Stapeln oder Verpacken) verhindern oder reduzieren. Je nach Ablüftzeit, Trocknungsgrad, Schichtdicke, Druck oder Temperatur bei einer bestimmten Belastung muss die Auswahl geeigneter Trennmittel erfolgen, die in der Regel dem Beschichtungsstoff zugesetzt werden und während der Trocknungsphase an die Oberfläche gelangen. Hierfür finden beispielsweise Paraffin, Polyethylenwachs, Wachsester, Siliconöle, Stearate, modifizierte Kieselsäuren und Talkum Verwendung.

Füllstoffe, beispielsweise mineralische wie Kreide und Talkum, erhöhen die Festigkeit und verbessern die Isolationswirkung.

Als Farbstoffe und Pigmente dienen Buntpigmente wie Titanoxid, das auch für den Kontakt mit Lebensmitteln, Kosmetika und Medikamenten geeignet ist.
Als Lösungsmittel können Wasser oder organische Lösungsmittel wie Alkohole eingesetzt werden.

Erfindungsgemäß bevorzugt ist eine Polymerzusammensetzung, welche die folgenden Zusammensetzungskomponenten beinhaltet:
mindestens 10, vorzugsweise mindestens 15 und besonders bevorzugt mindestens 20 Gew.-% eines Polymers;
von 0,05 bis 20, vorzugsweise 0,1 bis 10 und besonders bevorzugt 1 bis 8 Gew.-% des Esterprodukts;
von 0 bis 10, vorzugsweise 0,1 bis 10 und besonders bevorzugt 1 bis 8 Gew.-% weitere Antibeschlagagentien;
von 0 bis 75, vorzugsweise 5 bis 70 und besonders bevorzugt 10 bis 65 Gew.-% von den vorstehenden Zusammensetzungskomponenten verschiedene Zusatzstoffe;
wobei, jeweils bezogen auf die Polymerzusammensetzung, die Summe aller Gewichtsprozentangaben 100 ergeben.

In einer bevorzugten Ausführungsform der Erfindung ist die Polymerzusammensetzung eine thermoplastische Polymerzusammensetzung. Thermoplastische Polymerzusammensetzungen sind ab einem bestimmten Temperaturbereich reversibel umformbar. In weiteren Ausführungsformen der Erfindung ist die Polymerzusammensetzung eine nicht vernetzte, vernetzbare Polymerzusammensetzung, beispielsweise zur Herstellung von Elastomeren.

Ein weiterer Gegenstand der Erfindung ist Verwendung eines erfindungsgemäßen Esterprodukts als Antibeschlagmittel, bevorzugt als internes Antibeschlagmittel. Interne Antibeschlagmittel werden in Polymermassen eingearbeitet, bevor diese zu Formkörpern verarbeitet werden.

Ein weiterer Gegenstand der Erfindung ist ein Verfahren zur Herstellung eines Formkörpers, wobei eine erfindungsgemäße Polymerzusammensetzung zu dem Formkörper verarbeitet wird. Ein "Formkörper" im Sinne der Erfindung ist eine zu einer dreidimensionalen Raumform verarbeitete Polymermasse. Es kann sich dabei um einen durch thermische Verformung erhältlichen Formkörper handeln. Solche Formkörper werden beispielsweise durch die Verarbeitung von Thermoplasten nach bekannten Verfahren erhalten. Der Formköper kann jedoch auch ein vernetzter bzw. vulkanisierter Formkörper sein. Solche Formkörper werden beispielsweise bei der Verarbeitung von Elastomeren erhalten. Der erfindungsgemäße Formkörper weist Antibeschlag-Eigenschaften auf, die durch die Verteilung des Antibeschlagmittels in dem Formkörper und daher auch auf dessen Oberfläche erreicht werden.

Ein weiterer Gegenstand der Erfindung ist ein Formkörper, beinhaltend eine erfindungsgemäße Polymerzusammensetzung oder hergestellt aus einer erfindungsgemäßen Polymerzusammensetzung.

In einer bevorzugten Ausführungsform der Erfindung ist der Formkörper in Form einer Folie, einer Außenverkleidung, eines transparenten Formteils, eines Fensters, eines Visiers oder Brillenglases ausgebildet. Besonders bevorzugt dienen die Formkörper als Verpackungsmaterialien, insbesondere in der Form von Folien, Außenverkleidungen und transparenten Formteilen. Solche Verpackungsmaterialien mit Antibeschlag-Eigenschaften werden für die Verpackung von Lebensmitteln oder anderen Produkten mit einem Feuchtigkeitsgehalt verwendet. Bei solchen Verpackungsmaterialien lindert oder verhindern die AntibeschlagEigenschaften das Beschlagen der Verpackungsmaterialien von Innen. Bei weiteren Ausführungsformen der Erfindung, wie Außenverkleidungen, Fenstern, Visieren oder Brillengläsern wird die Bildung von Tropfen und von Ansammlungen von Feuchtigkeit auf der Außenseite und/oder Innenseite verhindert. Die erfindungsgemäßen Formkörper sind besonders bevorzugt transparent oder zumindest anteilig lichtdurchlässig.

Die erfindungsgemäßen thermoplastischen Polymerzusammensetzungen können allgemein nach bekannten Verfahren zu den erfindungsgemäßen Formkörpern umgesetzt werden. Dabei können die Polymerzubereitungen zunächst nach bekannten Methoden aufbereitet werden, beispielsweise durch die Einarbeitung von Zusatzstoffen oder durch die Umwandlung der Polymerzusammensetzung in eine geeignete Form, wie Granulate, Pulver, Pasten oder Lösungen. Gegebenenfalls werden die Polymerzusammensetzungen dabei mechanisch behandelt, also dispergiert, geknetet oder granuliert. Die Verarbeitung zu Formkörpern erfolgt beispielsweise durch Spritzgießen oder Extrudieren. Gegebenenfalls werden die Formteile nachbearbeitet, also umgeformt, geschnitten, oberflächenbehandelt oder verschweißt. Härtbare Polymerzusammensetzungen werden nach der Verpressung oder Verformung zu Formteilen gehärtet.

Ein weiterer Gegenstand der Verfahren zur Verwendung zur Herstellung eines Formkörpers, beinhaltend die Verfahrensschritte:
I) das Bereitstellen der thermoplastischen Zusammensetzung, beinhaltend ein erfindungsgemäßes Esterprodukt oder ein erfindungsgemäßes Antibeschlagmittel oder beide;
II) das Erhitzen der thermoplastischen Zusammensetzung auf die Glasübergangstemperatur des thermoplastischen Polymers oder auf eine Temperatur oberhalb der Glasübergangstemperatur des thermoplastischen Polymers;
III) Herstellung eines Formkörpers aus der im Verfahrensschritt II) hergestellten, erhitzten, thermoplastischen Zusammensetzung.

Im Schritt I) des erfindungsgemäßen Verfahrens zur Herstellung eines Formkör-; pers wird zunächst eine erfindungsgemäße, thermoplastische Zusammensetzung bereitgestellt, wobei diese Bereitstellung vorzugsweise durch ein Verfahren gemäß der ersten Variante des erfindungsgemäßen Verfahrens erfolgt.

Sodann wird im Verfahrensschritt II) die thermoplastische Zusammensetzung auf die Glasübergangstemperatur des thermoplastischen Polymers oder auf einer Temperatur oberhalb der Glasübergangstemperatur des thermoplastischen Polymers erhitzt. In diesem Zusammenhang ist es wiederum bevorzugt, dass das Erhitzen der thermoplastischen Zusammensetzung auf eine Temperatur in einem Bereich von 5 Grad unterhalb der Glasübergangstemperatur (T_{g}) bis 100°C oberhalb der Glasübergangstemperatur des eingesetzten, thermoplastischen Polymers, besonders bevorzugt auf eine Temperatur in einem Bereich von 1 Grad unterhalb der Glasübergangstemperatur (T_{g}) bis 50°C oberhalb der Glasübergangstemperatur des eingesetzten, thermoplastischen Polymers und am meisten bevorzugt auf eine Temperatur in einem Bereich von 1 Grad oberhalb der Glasübergangstemperatur (T_{g}) bis 20°C oberhalb der Glasübergangstemperatur des eingesetzten, thermoplastischen Polymers erfolgt, wobei jedoch auch hier die obere Grenze des Temperaturbereiches im wesentlichen von der Zersetzungstemperatur des eingesetzten, thermoplastischen Polymers begrenzt wird.

Grundsätzlich können die Verfahrensschritte I) und II) zeitgleich oder hintereinander durchgeführt werden. Eine gleichzeitige Durchführung der Verfahrensschritte I) und II) ist beispielsweise dann sinnvoll, wenn die thermoplastische Zusammensetzung mittels eines Schmelzmischverfahrens hergestellt wird. Hier kann es gegebenenfalls vorteilhaft sein, die durch das Schmelzmischverfahren hergestellte Zusammensetzung unmittelbar in einen Formkörper zu überführen. Eine nacheinander erfolgende Durchführung der Verfahrensschritte I) und II) ist beispielsweise dann sinnvoll, wenn die thermoplastische Zusammensetzung mittels eines Trockenmischverfahrens hergestellt wird oder aber wenn die thermoplastische Zusammensetzung zwar mittels eines Schmelzmischverfahrens hergestellt wird, jedoch nicht unmittelbar nach der Herstellung der Bildung eines Formkörpers unterzogen wird sondern vielmehr zunächst gemäß dem Verfahrensschritt v) abgekühlt wird.

Im Verfahrensschritt III) des erfindungsgemäßen Verfahrens zur Herstellung eines Formkörpers wird aus der im Verfahrensschritt II) hergestellten, erhitzten, thermoplastischen Zusammensetzung ein Formkörper hergestellt. Als Verfahren zur Herstellung eines Formkörpers kommen insbesondere das Spritzgießen, das Extrusionsformen, das Kompressionsformen, das Schichtformen, das Laminierungsformen, das Hohlformen, das Vakuumformen und das Transferformen in Betracht, wobei das Spritzgießen besonders bevorzugt ist.

In einer bevorzugten Ausführungsform der Erfindung wird in einem weiteren Verfahrensschritt IV) mindestens ein Teilbereich des in Verfahrenschritt III) erhaltenen Formkörpers in seinem Massequerschnitt gegenüber Verfahrenschritt III) verringert.

Gegenstand der Erfindung ist auch ein Verfahren zur Herstellung eines Packgutes, beinhaltend als Verfahrensschritte das Bereitstellen eines Gutes und eines erfmdungsgemäßen Formkörpers und das mindestens teilweise Umgeben des Gutes mit dem Formkörper.

Weiterhin entspricht es einer Ausgestaltung des erfindungsgemäßen Verfahrens zur Herstellung eines thermoplastischen Formkörpers, dass in mindestens einem weiteren Verfahrensschritt IV) mindestens ein Teilbereich des in Verfahrensschritt III) erhaltenen Formkörpers als Formkörperrohling dient und in seinem Massequerschnitt gegenüber verringert wird. Bei dem Massequerschnitt handelt es sich um den Querschnitt eines Bereiches des Formkörpers, der massiv aus der erfindungsgemäßen thermoplastischen Formmasse besteht. Beispielsweise bei Behältern oder Gebinden stellt der Massequerschnitt die Dicke eine Wandung dieser Behälter oder Gebinde dar. Bei eher faden- oder strangförmig ausgebildeten Formkörpern stellt der Massequerschnitt die Dicke dieser Fäden oder Stränge dar. Bei eher flächigen Gebilden wie Platten, Lagen, Bahnen, Filmen oder Folien stellt der Massequerschnitt die Stärke dieser flächigen Gebilde dar. Für das Verringen des Massequerschnitts kommen grundsätzlich alle dem Fachmann hierzu bekannten und geeigneten Methoden in Betracht. Hierunter fallen beispielsweise das Strecken in eine oder zwei Richtungen, Ziehen in eine oder zwei Richtungen, Schleudern oder Blasen, die jeweils vorzugsweise bei erhöhten Temperaturen erfolgen, bei denen die erfindungsgemäße thermoplastische Zusammensetzung so weich oder gar flüssig ist, dass ein Strecken, Ziehen Schleudern oder Blasen erfolgen kann. Der Teilbereich, in dem die Querschnittsverringerung erfolgt, macht vorzugsweise mindestens 50% und besonders bevorzugt mindesten 80% des in Schritt III) erhaltenen Formkörpers aus. Allgemein erfolgt das Strecken oder Ziehen, wenn aus dem in Schritt III) erhaltenen Formkörper eine Faser erhalten werden soll. Bei der Herstellung von Folien kann zum einen das Ziehen oder Strecken in eine oder mehrer Dimensionen erfolgen. So kann die aus einem Extruder laufende Bahn mit einer im Vergleich zu der Austrittsgeschwindigkeit aus dem Extruder höheren Geschwindigkeit auf eine Rolle gezogen werden. Soll hingegen ein Behälter oder Gebinde erhalten werden, so wird außer dem Strecken, Ziehen und Schleudern vornehmlich das Blasen in Schritt IV) eingesetzt. Hierbei erfolgt die Massequerschnittsverringerung durch das anlegen eines Gasdrucks. Der Gasdruck wird allgemein so gewählt, dass die meist mindestens auf Glasübergangstemperatur erhitzte thermoplastische Zusammensetzung des in Schritt III) erhaltenen Formkörpers gedehnt werden kann. In der Regel wird die Dehnung durch die Verwendung eines die Endform des Formkörpers habende Form begrenzt. Es weiterhin möglich, dass zwei oder mehrere der Verfahrenschritte I) bis IV) durch weitere Verfahrensschritte ergänzt werden und/oder zumindest zeitlich überlappende verlaufen. Dieses gilt insbesondere für die Verfahrensschritte III) und IV).

Einen Beitrag zur Lösung mindestens einer der eingangs genannten Aufgaben leistet weiterhin ein Verfahren zur Herstellung eines Packgutes beinhaltend als Verfahrensschritte:
a) das Bereitstellen eines Gutes und eines Formkörpers, insbesondere einer Folie, wobei der Formkörper erhältlich ist durch das vorstehend beschriebene Verfahren;
b) das mindestens teilweises Umgeben des Gutes mit dem Formkörper.

Bei dem im Verfahrensschritt a) bereitgestellten Gut handelt es sich vorzugsweise um ein Pharmazeutikum, ein Körperpflegemittel oder ein Lebensmittel. Das mindestens teilweise umgeben des Gutes kann beispielsweise durch das in DE-A-103 56 769 beschriebene Verfahren erfolgen.

Durch das erfindungsgemäße Esterprodukt, das Verfahren zu seiner Herstellung und die Verwendung als Antibeschlagmittel werden die der Erfindung zugrundeliegenden Aufgaben gelöst. Das Umesterungsverfahren ermöglicht die Herstellung eines effektiven und wirksamen Antibeschlagmittels unmittelbar aus nativen Ölen. Native Öle sind als Rohstoff in großen Mengen und preisgünstig verfügbar. Es ist daher nicht erforderlich, die vergleichsweise teueren reinen Fettsäuren und deren Gemische zu verwenden. Bei einem großtechnischen Verfahren wie der Herstellung von Antibeschlagmitteln bedeutet diese Vereinfachung eine signifikante Kostenersparnis. Darüber hinaus wurde überraschender Weise festgestellt, dass bei der Herstellung der Antibeschlagmittel unmittelbar ausgehend von nativen Ölen sehr gute Antibeschlag-Eigenschaften erzielt werden. Die erfindungsgemäß behandelten Kunststoffe zeigen eine vergleichweise geringe Trübung. Die Ansammlung von Tropfen auf der Folie erfolgt in Tests erst bei hoher Feuchtigkeit nach längeren Zeiten. Die Aufklarung der Folien nach der Bildung der Tropfen erfolgt vergleichsweise schnell. Das erfindungsgemäße Herstellungsverfahren und die Eigenschaften von erfindungsgemäß behandelten Kunststoffen werden in den folgenden Ausführungsbeispielen erläutert.

### Testverfahren:

Sofern nachfolgend nicht im Einzelnen ausgerührt, werden die in diesem Text beschriebenen Größen nach der jeweils besten geeigneten DIN-Vorschriften bestimmt. Sollte keine geeignete DIN-Vorschrift vorliegen, wird auf die ISO-Vorschrift zurückgegriffen, die am besten geeignet ist. Sofern nicht anders angegeben, werden alle Eigenschaften werden bei 25°C bestimmt.

Die Bestimmung der Dichte erfolgt mit einem Pyknometer. oder.51550.

### 1. Farbzahl

Die Bestimmung der Farbzahl erfolgt gemäß ISO 15305 nach Lovibond (Lov.).

### 2. Säurezahl

Die Bestimmung der Säurezahl erfolgt gemäß DIN EN ISO 3682.

### 3. Verseifungszahl

Die Bestimmung der Verseifungszahl erfolgt gemäß DIN EN ISO 3681.

### 4. Hot Fogging Test

Der Hot Fogging Test simuliert die Antibeschlageigenschaften von Filmen, die für Verpackungen verwendet werden, in die heiße oder warme Lebensmittel gefüllt werden, die dann geschlossen gelagert werden. Dazu werden 200ml Aquadest in ein 250 ml Becherglas gefüllt, das Glas mit einer Probe der zu testenden Folie abgedeckt und in einem auf 60°C temperiertes Bad positioniert. Anschließend werden über einen Zeitraum von 600 s die Zeitabstände notiert, in denen eine Veränderung des Filmes sichtbar wird.

### 5. Cold Fogging Test

Dieser Test simuliert die Antibeschlag-Eigenschaften von Filmen, die als Verpackungsmaterial für Lebensmittel verwendet werden, die im Kühlschrank gelagert werden. Dazu werden 200 ml Aquadest in ein 250 ml Becherglas gefüllt, das Glas mit einer Probe der zu testenden Folie abgedeckt und in einen auf 8°C temperierten, temperaturregelbaren Raum gestellt. Anschließend werden über einen Zeitraum von 600 s die Zeitabstände notiert, in denen eine Veränderung des Filmes sichtbar wird.

### 6. Dichte

Die Bestimmung der Dichte erfolgt gemäß DIN 51757 V 4.

### 7. Viskosität

Die Bestimmung der Viskosität erfolgt nach DIN 1342 T1, 2.

### 8. Oberflächenspannung

Die Bestimmung der Oberflächenspannung erfolgt gemäß DIN 53914.

### Ausführungsbeispiele:

### Beispiel 1: Umesterung von Rüböl mit Polyglycerin-3

In einem Glaskolben wurden 255,6 g Rüböl, 74,4 g Polyglycerin-3 (Fa. Solvay Chemicals) und 0,03 g LiOH*H₂O vorgelegt und unter Rühren auf 235 °C erhitzt. Nach 1 h wurde eine Vakuum von 300 mbar angelegt, nach 2 h Reaktionszeit wurde abgekühlt. Das Produkt ist eine blanke gelbe Flüssigkeit mit folgenden Eigenschaften:
Farbe 1" Lov. Gelb = 1,6, Lov. Rot = 0,5, Säurezahl = 0,10 mg KOH/g, Verseifungszahl = 146 mg KOH/g, Index (20 °C) = 1,4772.

### Beispiele 2 und 3: Herstellung der Prüfkörper

| **Beispiel:** | **B2** | **B3** |
|---|---|---|
| PVC EVIPOL SH 7020 | 100 | 100 |
| DOA PLASTOMOL | 37 | 37 |
| EDENOL D 81 | 13 | 13 |
| STABIOL VCZ 2222 | 0,8 | 0,8 |
| LOXIOL G 10 V | 1,6 | - |
| DISPONIL SMO 120 SPEZ. | 0,8 | - |
| LOXIOL P 1508 | 0,1 | 0,1 |
| LOXIOL G 20 | 0,1 | 0,1 |
| Produkt Beispiel 1 | - | 2,4 |

Die Komponenten wurden zusammengemischt und 5 min bei 185 °C auf einem Laborwalzwerk gewalzt. Die Walzfelle wurden nach dem "Hot Fogging Test" bei 60 °C untersucht.

### Hot Fogging Test, 60 °C:

| **Muster** | **Trübung an der Folie nach s** | **Bildung von Tropfen nach s** | **klarer Film nach s** |
|---|---|---|---|
| B2 | sofort | 60 | 300 |
| B3 | sofort | 45 | 210 |

| | | | |
|---|---|---|---|
| B2 ist der Stand der Technik und B3 ist nicht erfindungsgemäß. | | | |

### Beispiele 4 bis 9:

| **Beispiel:** | **B4*** | **B5*** | **B6** | **B7*** | **B8*** | **B9** |
|---|---|---|---|---|---|---|
| PVC EVIPOL SH 7020 | 100 | 100 | 100 | 100 | 100 | 100 |
| DOA PLASTOMOL | 7 | 7 | 7 | 7 | 7 | 7 |
| EDENOL D 81 | 15 | 15 | 15 | 15 | 15 | 15 |
| EDENOL 1215 | 15 | 15 | 15 | 15 | 15 | 15 |
| STABIOL VCZ 2222 | 0,8 | 0,8 | 0,8 | 0,8 | 0,8 | 0,8 |
| LOXIOL G 71 S | 0,2 | 0,2 | 0,2 | 0,2 | 0,2 | 0,2 |
| LOXIOL G 10 V | 1,5 | - | - | 1,6 | - | - |
| DISPONIL SMO 120 SPEZ. | 1,5 | - | 1,2 | - | - | - |
| DISPONIL SML 20 | - | - | - | 0,8 | - | 0,8 |
| Produkt Beispiel 1 | - | 3,0 | 1,2 | - | 2,4 | 1,6 |

| | | | | | | |
|---|---|---|---|---|---|---|
| * nicht erfindungsgemaß | | | | | | |

Die Komponenten der Besipiele B4 - B6 wurden zusammengemischt und 5 min bei 185 °C auf einem Laborwalzwerk der Firma Berstorff Maschinenfabrik gewalzt. Die Walzfelle wurden nach dem "Cold Fogging Test" bei 25 °C / 8 °C untersucht.

### Cold Fogging Test, 25 °C Wassertemperatur / 8 °C Umgebungstemperatur

| **Muster** | **Trübung an der Folie nach s** | **Bildung von Tropfen nach s** | **klarer Film nach s** |
|---|---|---|---|
| B4 | sofort | > 600 | - |
| B5 | sofort | 60 | 360 |
| B6 | sofort | << 60 | 60 |

| | | | |
|---|---|---|---|
| B4 ist der Stand der Technik. | | | |

Die Komponenten der Besipiele B7 - B9 wurden zusammengemischt und 5 min bei 185 °C auf einem Laborwalzwerk der Firma Berstorff Maschinenfabrik gcwalzt. Die Walzfelle wurden nach dem "Hot Fogging Test" bei 60 °C untersucht.

### Hot Fogging Test, 60 °C:

| **Muster** | **Trübung an der Folie nach s** | **klarer Film nach s** |
|---|---|---|
| B7 | sofort | > 300 |
| B8 | sofort | > 360 |
| B9 | sofort | 60 |

| | | |
|---|---|---|
| B9 ist erfindungsgemäß. | | |

### Rohstoffe:

| **Handelsname** | **Hersteller** | **Inhaltsstoff/Funktion** |
|---|---|---|
| PVC EVIPOL SH 7020 | Ineos GmbH | PVC |
| DOA PLASTOMOL | BASF ES | Weichmacher |
| EDENOL D 81 | Cognis Oleochemicals GmbH | epoxidiertes Sojaöl |
| STABIOL VCZ 2222 | Reagens GmbH | Ca/Zn-Stabilisator |
| LOXIOL G 10 V | Cognis Oleochemicals GmbH | Glycerinmonooleat |
| DISPONIL SMO 120 SPEZ. | Cognis GmbH | PEG Sorbitan Monooleat |
| DISPONIL SML 20 | Cognis GmbH | PEG Sorbitan Monolaurat |
| LOXIOL P 1508 | Cognis Oleochemicals GmbH | Gleitmittel |
| LOXIOL G 20 | Cognis Oleochemicals GmbH | Gleitmittel |
| Edenol 1215 | Cognis Oleochemicals GmbH | Polymerweichmacher |
| Loxiol G 71S | Cognis Oleochemicals GmbH | Trennmittel |

Anmerkung: Die Cognis Oleochemicals GmbH hat kürzlich in Emery Oleochemicals GmbH umfirmiert.

## Patentansprüche

1. Antibeschlagmittel, beinhaltend
a) ein Esterprodukt erhältlich nach einem Verfahren beinhaltend als Verfahrenschritte:
S1) Bereitstellen einer Reaktionsmischung als Reaktionskomponenten beinhaltend
S1a) ein mindestens zwei Glycerineinheiten aufweisendes Polyglycerin;
S1b) ein auf einem nativen Öl basierendes Öl;
S2) Umsetzen des Reaktionsgemisch durch eine Umesterung in Gegenwart eines basischen Katalysators unter Erhalt des Esterprodukts;
b) mindestens ein weiteres Antibeschlagagens ausgewählt aus der Gruppe bestehend aus einem Polyethylenglykolether, einem Partialglycerid oder einem Polyethylenglykolester oder eine Mischung aus mindestens zwei davon.

2. Antibeschlagmittel nach Anspruch 1, wobei die Umesterung als Eintopfverfahren erfolgt.

3. Antibeschlagmittel nach Anspruch 1 oder 2, wobei der basische Katalysator ausgewählt ist aus der Gruppe bestehend aus Alkalihydroxid, Erdalkalihydroxid oder Hydroxiden der III. Hauptgruppe oder einer Mischung aus mindestens zwei davon.

4. Antibeschlagmittel nach einem der vorhergehenden Ansprüche, wobei das Öl ausgewählt ist aus der Gruppe bestehend aus Rüböl, Rizinusöl, gehärtetes Rizinusöl, Sonnenblumenöl, Palmöl, Sojaöl, Talgöl, gehärtetes Talgöl, Kokosöl und Erdnussöl oder eine Mischung aus mindestens zwei davon.

5. Antibeschlagmittel nach einem der vorhergehenden Ansprüche, wobei das Polyglycerin eine durchschnittliche Anzahl von 1,5 bis 5 Glycerineinheiten pro Molekül aufweist.

6. Antibeschlagmittel nach einem der vorhergehenden Ansprüche, wobei die Umesterung in Gegenwart mindestens eines weiteren Alkohols erfolgt.

7. Antibeschlagmittel nach Anspruch 6, wobei der weitere Alkohol mindestens zwei Hydroxygruppen aufweist.

8. Antibeschlagmittel nach Anspruch 6 oder 7, wobei der weitere Alkohol ausgewählt ist aus der Gruppe bestehend aus Glycerin, Sorbitol, Pentaerythrit, Trimethylolpropan oder deren Alkoxylate, Polyethylenglycol und Polypropylenglycol.

9. Antibeschlagmittel nach einem der vorhergehenden Ansprüche, wobei das Verfahren in einem Reaktionsgemisch durchgeführt wird, das folgende Reaktionskomponenten enthält: mindestens 10 Gew.-% Öl, von 5 bis 90 Gew.-% Polyglycerin, von 0,0001 bis 1 % Gew.-% basischer Katalysator, von 0 bis 40 % Gew.-% eines weiteren Alkohols mit mindestens zwei Hydroxygruppen von 0 bis 20 Gew.-% von den vorstehenden Reaktionskomponenten verschiedene Zusatzstoffe, jeweils bezogen auf das Reaktionsgemisch, wobei die Summe der Prozentangaben der Reaktionskomponenten 100 ergibt.

10. Antibeschlagmittel nach einem der vorhergehenden Ansprüche, mit mindestens einer der folgenden Eigenschaften:
El einer Viskosität in einem Bereich von 1,5 bis 15 mPas
E2 eine Dichte in einem Bereich von 0,8 bis 0,95 g/cm³.

11. Polymerzusammensetzung, beinhaltend ein Esterprodukt ein Antibeschlagmittel nach einem der vorhergehenden Ansprüche und mindestens ein Polymer.

12. Polymerzusammensetzung nach Anspruch 11, wobei das Polymer ausgewählt ist aus der Gruppe bestehend aus Polyvinylchlorid, Polypropylen, Polyethylen, Polyethylen/Polypropylen-Copolymeren, Polyethylen-terephthalat, Polylactat, Polycarbonat, Polyester und Gemischen davon.

13. Polymerzusammensetzung nach Anspruch 11 oder 12, enthaltend 0,05 bis 10 Gew.-% des Esterprodukts.

14. Polymerzusammensetzung nach einem der Ansprüche 11 bis 13, welche die folgenden Komponenten enthält:
mindestens 10 Gew.-% eines Polymers,
von 0,05 bis 20 Gew.-% des Esterprodukts,
von 0 bis 10 Gew.-% weitere Antibeschlagagens,
von 0 bis 75 Gew.-% Zusatzstoffe.

15. Polymerzusammensetzung nach einem der Ansprüche 11 bis 14, wobei die Zusammensetzung eine thermoplastische Polymerzusammensetzung ist.

16. Verfahren zur Herstellung eines Formkörpers, wobei eine Polymerzusammensetzung gemäß einem der Ansprüche 11 bis 15 zu dem Formkörper verarbeitet wird.

17. Formkörper, beinhaltend eine Polymerzusammensetzung nach einem der Ansprüche 11 bis 15.

18. Formkörper nach Anspruch 17 oder erhältlich nach einem Verfahren nach Anspruch 16 in Form einer Folie, einer Außenverkleidung, eines transparenten Formteils, eines Fensters, eines Visiers oder Brillenglases.

19. Ein Verfahren zur Herstellung eines thermoplastischen Formkörpers, beinhaltend die Verfahrensschritte:
I) das Bereitstellen des Antibeschlagmittels nach einem der Ansprüche 1 bis 10;
II) das Erhitzen der thermoplastischen Zusammensetzung auf die Glasübergangstemperatur des thermoplastischen Polymers oder auf eine Temperatur oberhalb der Glasübergangstemperatur des thermoplastischen Polymers;
III) Herstellung eines Formkörpers aus der im Verfahrensschritt II) hergestellten, erhitzten, thermoplastischen Zusammensetzung.

20. Das Verfahren nach Anspruch 19, wobei in einem weiteren Verfahrensschritt IV) mindestens ein Teilbereich des in Verfahrenschritt III) erhaltenen Formkörpers in seinem Massequerschnitt gegenüber Verfahrenschritt III) verringert wird.

21. Ein Verfahren zur Herstellung eines Packgutes beinhaltend als Verfahrensschritte:
a) das Bereitstellen eines Gutes und eines Formkörpers gemäß Anspruch 17 oder 18 oder eines thermoplastischen Formkörpers erhältlich nach Anspruch 19 oder 20 oder einer Mischung aus mindestens zwei davon als ein Packformkörper;
b) das mindestens teilweise Umgeben des Gutes mit dem Packformkörper.

## Claims

1. Anti-fogging agent comprising
a) an ester product obtainable by a process comprising as process steps:
S1) providing a reaction mixture comprising as reaction components
S1a) a polyglycerol having at least two glycerol units;
S1b) an oil based on a natural oil;
S2) reacting the reaction mixture by a transesterification in the presence of a basic catalyst to obtain the ester product;
b) at least one further anti-fogging agent selected from the group consisting of a polyethylene glycol ether, a partial glyceride or a polyethylene glycol ester, or a mixture of at least two thereof.

2. Anti-fogging agent according to Claim 1, wherein the transesterification takes places as a one-pot process.

3. Anti-fogging agent according to Claim 1 or 2, wherein the basic catalyst is selected from the group consisting of alkali metal hydroxide, alkaline earth metal hydroxide or hydroxides of main group III, or a mixture of at least two thereof.

4. Anti-fogging agent according to any of the preceding claims, wherein the oil is selected from the group consisting of colza oil, castor oil, hydrogenated castor oil, sunflower oil, palm oil, soybean oil, tallow oil, hydrogenated tallow oil, coconut oil and peanut oil, or a mixture of at least two thereof.

5. Anti-fogging agent according to any of the preceding claims, wherein the polyglycerol has an average number of 1.5 to 5 glycerol units per molecule.

6. Anti-fogging agent according to any of the preceding claims, wherein the transesterification takes place in the presence of at least one further alcohol.

7. Anti-fogging agent according to Claim 6, wherein the further alcohol comprises at least two hydroxyl groups.

8. Anti-fogging agent according to Claim 6 or 7, wherein the further alcohol is selected from the group consisting of glycerol, sorbitol, pentaerythritol, trimethylolpropane or alkoxylates thereof, polyethylene glycol and polypropylene glycol.

9. Anti-fogging agent according to any of the preceding claims, wherein the process is carried out in a reaction mixture which comprises the following reaction components:
at least 10 wt% of oil,
from 5 to 90 wt% of polyglycerol,
from 0.0001 to 1 wt% of basic catalyst,
from 0 to 40 wt% of a further alcohol having at least two hydroxyl groups,
from 0 to 20 wt% of additives different from the above reaction components,
based in each case on the reaction mixture, with the sum of the percentages of the reaction components making 100.

10. Anti-fogging agent according to any of the preceding claims, having at least one of the following properties:
E1 a viscosity in a range from 1.5 to 15 mPas;
E2 a density in a range from 0.8 to 0.95 g/cm³.

11. Polymer composition comprising an ester product, an anti-fogging agent according to any of the preceding claims and at least one polymer.

12. Polymer composition according to Claim 11, wherein the polymer is selected from the group consisting of polyvinyl chloride, polypropylene, polyethylene, polyethylene/polypropylene copolymers, polyethylene terephthalate, polylactate, polycarbonate, polyester and mixtures thereof.

13. Polymer composition according to Claim 11 or 12, comprising 0.05 to 10 wt% of the ester product.

14. Polymer composition according to any of Claims 11 to 13, which comprises the following components:
at least 10 wt% of a polymer,
from 0.05 to 20 wt% of the ester product,
from 0 to 10 wt% of further anti-fogging agents,
from 0 to 75 wt% of additives.

15. Polymer composition according to any of Claims 11 to 14, wherein the composition is a thermoplastic polymer composition.

16. Process for producing a shaped article, wherein a polymer composition according to any of Claims 11 to 15 is processed to give the shaped article.

17. Shaped article comprising a polymer composition according to any of Claims 11 to 15.

18. Shaped article according to Claim 17 or obtainable by a process according to Claim 16, in the form of a film, an outer lining, a transparent moulding, a window, or a visor or spectacle lens.

19. Process for producing a shaped thermoplastic article, comprising the process steps of:
I) providing the anti-fogging agent according to any of Claims 1 to 10;
II) heating the thermoplastic composition to the glass transition temperature of the thermoplastic polymer or to a temperature above the glass transition temperature of the thermoplastic polymer;
III) Producing a shaped article from the heated thermoplastic composition produced in process step II).

20. Process according to Claim 19, wherein, in a further process step IV), at least one sub-region of the shaped article obtained in process step III) is reduced in its mass cross section relative to process step III).

21. Process for producing a packaged product, comprising as process steps:
a) providing a product and a shaped article according to Claim 17 or 18 or a thermoplastic article obtainable according to Claim 19 or 20, or a mixture of at least two thereof, as a shaped packaging article;
b) at least partly surrounding the product with the shaped packaging article.

## Revendications

1. Agent anti-condensation, comprenant
a) un produit de type ester, pouvant être obtenu selon un procédé comprenant comme étapes de processus :
S1) la disposition d'un mélange réactionnel comprenant comme composants réactionnels
S1a) un polyglycérol comportant au moins deux unités glycérol ;
S1b) une huile à base d'une huile naturelle ;
S2) la mise en réaction du mélange réactionnel par une transestérification en présence d'un catalyseur basique, avec obtention du produit de type ester ;
b) au moins un autre agent anti-condensation, choisi dans le groupe consistant en un éther de polyéthylèneglycol, un glycéride partiel ou un ester de polyéthylèneglycol ou un mélange d'au moins deux de ceux-ci.

2. Agent anti-condensation selon la revendication 1, dans lequel la transestérification s'effectue en tant que procédé en un seul récipient.

3. Agent anti-condensation selon la revendication 1 ou 2, dans lequel le catalyseur basique est choisi dans le groupe consistant en hydroxyde de métal alcalin, hydroxyde de métal alcalino-terreux ou hydroxydes du groupe IIIA ou un mélange d'au moins deux de ceux-ci.

4. Agent anti-condensation selon l'une quelconque des revendications précédentes, dans lequel l'huile est choisie dans le groupe constitué par l'huile de navette, l'huile de ricin, l'huile de ricin hydrogénée, l'huile de tournesol, l'huile de palme, l'huile de soja, l'huile de suif, l'huile de suif hydrogénée, l'huile de coprah et l'huile d'arachide ou un mélange d'au moins deux de celles-ci.

5. Agent anti-condensation selon l'une quelconque des revendications précédentes, dans lequel le polyglycérol présente un nombre moyen de 1,5 à 5 unités glycérol par molécule.

6. Agent anti-condensation selon l'une quelconque des revendications précédentes, dans lequel la transestérification s'effectue en présence d'au moins un autre alcool.

7. Agent anti-condensation selon la revendication 6, dans lequel l'autre alcool comporte au moins deux groupes hydroxy.

8. Agent anti-condensation selon la revendication 6 ou 7, dans lequel l'autre alcool est choisi dans le groupe constitué par le glycérol, le sorbitol, le pentaérythritol, le triméthylolpropane ou leurs produits d'alcoxylation, le polyéthylèneglycol et le polypropylèneglycol.

9. Agent anti-condensation selon l'une quelconque des revendications précédentes, dans lequel on effectue le procédé dans un mélange réactionnel qui contient les composants réactionnels suivants :
au moins 10 % en poids d'huile,
de 5 à 90 % en poids de polyglycérol,
de 0,0001 à 1 % en poids de catalyseur basique,
de o à 40 % en poids d'un autre alcool comportant au moins deux groupes hydroxy,
de o à 20 % en poids d'additifs différents des composants réactionnels précédents,
chaque fois par rapport au mélange réactionnel, la somme des pourcentages des composants réactionnels étant égale à 100.

10. Agent anti-condensation selon l'une quelconque des revendications précédentes, ayant au moins l'une des propriétés suivantes :
E1 une viscosité dans une plage de 1,5 à 15 mPa.s
E2 une densité dans une plage de 0,8 à 0,95 g/cm³.

11. Composition de polymère, comprenant un produit de type ester, un agent anti-condensation selon l'une quelconque des revendications précédentes et au moins un polymère.

12. Composition de polymère selon la revendication 11, dans laquelle le polymère est choisi dans le groupe constitué par le poly(chlorure de vinyle), le polypropylène, le polyéthylène, des copolymères polyéthylène/polypropylène, le poly(téréphtalate d'éthylène), le polylactate, le polycarbonate, des polyesters et des mélanges de ceux-ci.

13. Composition de polymère selon la revendication 11 ou 12, contenant 0,05 à 10 % en poids du produit de type ester.

14. Composition de polymère selon l'une quelconque des revendications 11 à 13, qui contient les composants suivants :
au moins 10 % en poids d'un polymère,
de 0,05 à 20 % en poids du produit de type ester,
de 0 à 10 % en poids d'autres agents anti-condensation,
de 0 à 75 % en poids d'additifs.

15. Composition de polymère selon l'une quelconque des revendications 11 à 14, la composition étant une composition de polymère thermoplastique.

16. Procédé pour la production d'un corps moulé, dans lequel on transforme une composition de polymère selon l'une quelconque des revendications 11 à 15 en le corps moulé.

17. Corps moulé, comportant une composition de polymère selon l'une quelconque des revendications 11 à 15.

18. Corps moulé selon la revendication 17 ou pouvant être obtenu conformément à un procédé selon la revendication 16, sous forme d'un film, d'un habillage externe, d'une pièce moulée transparente, d'une fenêtre, d'une visière ou d'un verre de lunette.

19. Procédé pour la production d'un corps moulé thermoplastique, comportant les étapes de procédé suivantes :
I) la disposition de l'agent anti-condensation selon l'une quelconque des revendications 1 à 10 ;
II) le chauffage de la composition thermoplastique jusqu'à la température de transition vitreuse du polymère thermoplastique ou jusqu'à une température supérieure à la température de transition vitreuse du polymère thermoplastique ;
III) la production d'un corps moulé à partir de la composition thermoplastique chauffée, produite dans l'étape II) du procédé.

20. Procédé selon la revendication 19, dans lequel on réduit, dans une autre étape IV) du procédé, la section transversale de la masse d'au moins une zone partielle du corps moulé obtenu dans l'étape III) du procédé, par rapport à l'étape III) du procédé.

21. Procédé pour la production d'une marchandise emballée, comportant comme étapes de procédé :
a) la disposition d'une marchandise et d'un corps moulé selon la revendication 17 ou 18 ou d'un corps moulé thermoplastique pouvant être obtenu selon la revendication 19 ou 20 ou d'un mélange d'au moins deux de ceux-ci, en tant qu'un corps moulé d'emballage ;
b) l'entourage au moins en partie de la marchandise avec le corps moulé d'emballage.
